# EUROPÄISCHE PATENTSCHRIFT

(11) **EP 3 030 813 B1**
(45) Veröffentlichungstag und Bekanntmachung des Hinweises auf die Patenterteilung: **02.05.2018**
(21) Anmeldenummer: 14707422.3
(22) Anmeldetag: 03.03.2014
(51) Int. Cl.: F16J 9/28, F16J 9/26, F16J 9/20, F16J 15/56, F16J 15/3236, F15B 15/14

(54) **DICHTUNGSSATZ SOWIE DICHTUNGSANORDNUNG MIT ZUMINDEST EINEM DICHTUNGSSATZ**
SEAL SET AND SEAL ARRANGEMENT HAVING AT LEAST ONE SEAL SET
ENSEMBLE FORMANT JOINT D'ÉTANCHÉITÉ ET AGENCEMENT D'ÉTANCHÉITÉ COMPORTANT AU MOINS UN ENSEMBLE FORMANT JOINT D'ÉTANCHÉITÉ

(30) Priorität: 05.08.2013 DE 102013108419
(43) Veröffentlichungstag der Anmeldung: 15.06.2016
(73) Patentinhaber: Dr. Walter Hunger Beteiligungs GmbH & Co. Besitz KG, 97080 Würzburg (DE)
(72) Erfinder: HUNGER, Ingrid, 97816 Lohr (DE)
(74) Vertreter: Witte, Weller & Partner Patentanwälte mbB
(86) Internationale Anmeldenummer: PCT/EP2014/054068
(87) Internationale Veröffentlichungsnummer: WO 2015/018536

(56) Entgegenhaltungen:
- EP-A1- 1 612 461
- DE-C- 948 464
- DE-U- 7 304 680
- JP-A- H04 165 168
- US-A- 3 495 843
- US-A- 4 053 166
- US-A- 4 195 854
- US-A- 4 311 316
- US-A- 6 050 570
- US-A1- 2012 286 478

## Beschreibung

Die Erfindung betrifft einen Dichtungssatz, insbesondere eine Kolbendichtung oder Kolbenstangendichtung, zur Abdichtung einer Primärseite, insbesondere einer Niederdruckseite, gegenüber einer Sekundärseite, insbesondere einer Hochdruckseite, die einen Grundkörper, der an einem Trägerteil aufnehmbar ist, und einen Gleitring zur Kontaktierung einer Gleitfläche eines Gleitpartnerteils aufweist. Die Erfindung betrifft ferner eine Dichtungsanordnung für einen Kolben oder eine Kolbenstange, insbesondere für Hydraulikanwendungen, mit zumindest einem derartigen Dichtungssatz.

Derartige oder ähnliche Dichtungssätze und Dichtungsanordnungen mit Dichtungssätzen sind etwa aus der DE 24 61 455 A1 sowie aus der DE 28 44 906 A1 bekannt.
Eine Dichtungsanordnung gemäß dem Oberbegriff des Anspruchs 1 ist beispielhaft aus der US 2012/0286478 A1 bekannt.
Aus der US 4,311,316 A ist eine ringförmige Wellendichtung bekannt, die einen ringförmigen Halteabschnitt, ein ringförmiges Dichtelement und einen ringförmigen Verformungsabschnitt aufweist, wobei das Dichtelement eine Primärdichtlippe und eine Sekundärdichtlippe aufweist, die von der Primärdichtlippe axial nach innen versetzt ist, wobei der Verformungsabschnitt den ringförmigen Halteabschnitt mit dem Dichtelement verbindet und dazu ausgestaltet ist, dem Dichtelement eine radiale Ausgleichsbewegung mit einer Welle in Bezug auf den Halteabschnitt zu ermöglichen.
Weitere Gestaltungen von Dichtelementen sind aus der US 4,053,166 A, EP 1 612 461 A1, US 4,195,854 A, US 3,495,843 A, DE 73 04 680 U, US 6,050,570 A, JP H04 165 168 A, sowie der DE 948 464 C bekannt.

Im Hause der Anmelderin ist ferner durch Benutzung bekannt geworden ein Dichtungssatz, der mit einem Grundkörper versehen ist, an dem eine radial umlaufende Aufnahmenut für einen Gleitring ausgebildet ist, wobei der Gleitring im gefügten Zustand des Dichtungssatzes in der Aufnahmenut aufgenommen ist und ein Gleitpartnerteil, etwa eine Kolbenstange oder eine Zylinderfläche, kontaktiert. Am Grundkörper ist ferner eine Dichtlippe ausgebildet, die eine Kontaktspitze aufweist, die ebenso im gefügten Zustand das Gleitpartnerteil kontaktieren kann. Der Gleitring weist eine einseitige, stufenförmige Ausnehmung auf, die an der der Dichtlippe zugewandten Seite des Gleitrings in den Gleitring eingebracht ist und im gefügten Zustand des Dichtungssatzes zwischen dem Gleitring und dem Gleitpartnerteil angeordnet ist.

Derartige Dichtungssätze werden üblicherweise zur Abdichtung von Kolben-Zylinder-Anordnungen, etwa von sogenannten Hydraulikzylindern, und ähnlichen Antriebselementen verwendet, bei denen es häufig zu relativen Gleitbewegungen zwischen beteiligten Komponenten kommt. Üblicherweise können die Dichtungssätze in Dichtungsanordnungen integriert sein, die beispielsweise ferner auch Lagerelemente, Führungselemente, Abdeckungen, Abstreifer oder ähnliche Bauelemente umfassen können.

Insbesondere kann es sich bei diesen Dichtungssätzen um Dichtungssätze für zylindrische Dichtflächen handeln. Kolben-Zylinder-Anordnungen weisen üblicherweise Betriebsmedien auf, die etwa Hydrauliköl, Wasser-Öl-Emulsionen und/oder Druckluft umfassen können. Insbesondere dann, wenn die Kolben-Zylinder-Anordnung zu Antriebszwecken genutzt wird, können zwischen einer druckbelasteten Seite (hier auch: Sekundärseite) und einer nicht mit dem Betriebsmedium belasteten Seite (hier auch: Primärseite) hohe Druckunterschiede bestehen.

Insgesamt sollen die Dichtungssätze einerseits eine gute Abdichtung auch bei hohen Druckdifferenzen gewährleisten und andererseits möglichst wenig Reibung erzeugen, um die gewünschten Relativbewegungen nicht übermäßig zu behindern. Diese sich grundsätzlich widersprechenden Auslegungsziele erfordern häufig Kompromisse bei der Auslegung und Konstruktion von Dichtungssätzen.

Vor diesem Hintergrund liegt der Erfindung die Aufgabe zugrunde, einen Dichtungssatz und eine Dichtungsanordnung mit einem derartigen Dichtungssatz anzugeben, die die vorstehend beschriebenen Ziele möglichst weitgehend erfüllen und sich möglichst für hochdynamische Anwendungen eignen sowie nach Möglichkeit eine hohe Robustheit aufweisen, um etwa kostenintensive Folgeschäden bei der Vorrichtung möglichst weitgehend vermeiden zu können. Ferner soll das Dichtungskonzept für hochbelastete Anwendungen (Heavy-Duty-Anwendungen) geeignet sein.

Diese Aufgabe wird erfindungsgemäß gelöst durch einen Dichtungssatz, insbesondere eine Kolbendichtung oder eine Kolbenstangendichtung, zur

Abdichtung einer Primärseite, insbesondere einer Niederdruckseite, gegenüber einer Sekundärseite, insbesondere einer Hochdruckseite, mit einem Grundkörper, der an einem Trägerteil aufnehmbar ist, und mit einem Gleitring zur Kontaktierung einer Gleitfläche eines Gleitpartnerteils, wobei der Grundkörper ringförmig gestaltet ist und eine radial umlaufende Aufnahmenut für den Gleitring aufweist, wobei am Grundkörper ferner eine radial umlaufende Dichtlippe vorgesehen ist, die zwischen der Aufnahmenut für den Gleitring und einem sekundärseitigen Ende des Grundkörpers ausgebildet ist, wobei die Dichtlippe einen Spitzenbereich und eine sich daran anschließende konische Ringfläche aufweist, und wobei der Gleitring im gefügten Zustand zumindest abschnittsweise die Aufnahmenut, eine sich daran anschließende primärseitige Anschlussfläche und die konische Ringfläche überdeckt, wobei die Aufnahmenut des Grundkörpers mit einem ballig geformten Nutgrund versehen ist, wobei der Nutgrund einen konvexen Querschnitt aufweist, und dass der Gleitring ferner eine Versatzfläche aufweist, die derart ausgestaltet, dass im gefügten Zustand zwischen der Versatzfläche des Gleitrings und der mit dieser korrespondierenden primärseitigen Anschlussfläche des Grundkörpers ein Versatz e besteht.

Die Aufgabe der Erfindung wird auf diese Weise vollständig gelöst.

Erfindungsgemäß kann sich nämlich nunmehr der Gleitring flächiger am Grundkörper abstützen und ist dabei insbesondere nicht nur auf einen Bereich beschränkt, in dem im Grundkörper die Aufnahmenut für den Gleitring ausgebildet ist. Somit kann der Gleitring auch flächiger in Kontakt mit der Gleitfläche des Gleitpartnerteils treten. Folglich kann sich die Flächenpressung des Gleitrings bzw. der Gleitfläche des Gleitpartnerteils im gefügten Zustand deutlich verringern. Auch wenn die am Grundkörper ausgebildete Dichtlippe weiterhin zur Kontaktierung der Gleitfläche des Gleitpartnerteils ausgebildet ist, ist es von Vorteil, einen darüber hinausgehenden Kontakt zwischen dem Grundkörper und dem Gleitpartnerteil möglichst weitgehend zu unterbinden. Somit können sich undefinierte Kontaktzustände vermeiden lassen, die etwa mit unerwünschter Stick-Slip-Bewegung (auch: Haftgleitbewegung) einhergehen können.

Es versteht sich, dass der Dichtungssatz grundsätzlich als innen dichtender Dichtungssatz, alternativ auch als außen dichtender Dichtungssatz ausgebildet sein kann. Bei einem innen dichtenden Dichtungssatz ist der Gleitring üblicherweise an einem Innenumfang des Grundkörpers aufgenommen. So kann der Grundkörper etwa an einem gestellseitigen Zylinderteil aufgenommen sein, wobei der Gleitring eine Kolbenstange kontaktiert, die das Gleitpartnerteil darstellt und gegenüber dem gestellseitigen Zylinderteil eine Relativbewegung, insbesondere eine translatorische Relativbewegung vollziehen kann.

Wenn der Dichtungssatz alternativ als außen dichtender Dichtungssatz ausgestaltet ist, kann der Grundkörper beispielhaft an einem Kolben aufgenommen sein und an seinem Außenumfang mit der Aufnahmenut für den Gleitring versehen sein, wobei der Gleitring dazu ausgebildet ist, eine als Gleitpartnerteil ausgebildete (Innen-)Zylinderfläche zu kontaktieren und sich mit dem Kolben relativ zu dieser zu bewegen.

Es versteht sich daher, dass die nachfolgend näher beschriebenen Ausgestaltungen und Aspekte sowohl auf eine innen dichtende Ausgestaltung des Dichtungssatzes als auch auf eine außen dichtende Ausgestaltung des Dichtungssatzes übertragen werden können. Demgemäß kann es sich bei dem Trägerteil um ein gestellseitiges Teil, ferner jedoch auch um ein bewegliches Teil handeln. Der Dichtungssatz dient zur Abdichtung relativ zueinander beweglicher Teile, wobei es grundsätzlich unerheblich ist, welches der beiden beteiligten Teile, etwa das Trägerteil oder das Gleitpartnerteil, tatsächlich eine Absolutbewegung vollzieht.

Die Dichtlippe des Grundkörpers kann im Spitzenbereich eine umlaufende Dichtkante aufweisen. Die Dichtkante kann dazu ausgebildet sein, im Wesentlichen eine Linienberührung zwischen dem Grundkörper und dem Gleitpartnerteil zu bewirken. Es ist bevorzugt, wenn darüber hinaus keine unmittelbare direkte Kontaktierung zwischen dem Grundkörper und dem Gleitpartnerteil erfolgt. Die Dichtlippe des Grundkörpers kann insbesondere als sich zur Sekundärseite hin erstreckende schräge Dichtlippe ausgebildet sein. Die konische Ringfläche der Dichtlippe kann sich in Richtung auf die Primärseite an den Spitzenbereich der Dichtlippe des Grundkörpers anschließen. Die Dichtlippe des Grundkörpers kann zumindest abschnittsweise radial auslenkbar gestaltet sein.

Allgemein kann die Sekundärseite (auch: Hochdruckseite) als Druckseite bezeichnet werden. Allgemein kann die Primärseite (auch: Niederdruckseite) auch als sogenannte "drucklose" Seite bezeichnet werden. Es versteht sich, dass an der "drucklosen" Seite selbstverständlich ein (niedriger) Druck anliegen kann, beispielsweise der Atmosphärendruck.

Es hat sich gezeigt, dass der Dichtungssatz besonders für hochdynamische Anwendungen mit hohen Relativgeschwindigkeiten geeignet ist. Hierfür zeigt sich insbesondere ein aufgrund der Gestaltung optimiertes Reibverhalten verantwortlich.

Dichtungen der vorgenannten Art können beispielsweise bei Baumaschinen, Industrieanlagen, bei der Fördertechnik oder bei ähnlichen Anwendungen zur Verwendung kommen. Die Dichtungen können allgemein Nennabmessungen, etwa Nenndurchmesser, aufweisen, die etwa einem Innendurchmesser (einer Kolbenstange) von etwa 10 mm bis hin zu über 600 mm entsprechen. Abhängig von verwendeten Werkstoffen können etwa Temperaturbereiche von -50°C (Celsius) bis +200°C (Celsius) abgedeckt werden. Dichtungsanordnungen mit derartigen Dichtungssätzen können hohen Druckdifferenzen standhalten. Dies kann etwa Druckdifferenzen im Bereich von mehreren hundert bar, maximal etwa 450 bar bis über 650 bar, umfassen.

In vorteilhafter Weiterbildung des Dichtungssatzes sind der Grundkörper und der Gleitring ringförmig um eine gemeinsame Längsachse ausgebildet, wobei der Grundkörper und der Gleitring am primärseitigen Ende des Dichtungssatzes jeweils eine Abschlussfläche aufweisen, deren axiale Längserstreckungen im Wesentlichen miteinander korrespondieren.

Auf diese Weise kann der Gleitring den Grundkörper zur Primärseite (Niederdruckseite) hin vollständig oder nahezu vollständig abdecken, so dass in diesem Bereich keine Kontaktierung des Gleitpartnerteils durch den Grundkörper droht. Bei im Stand der Technik bekannten Dichtungssätzen konnte beobachtet werden, dass im Bereich des primärseitigen Endes durchaus eine Kontaktierung des Grundkörpers mit dem Gleitpartnerteil erfolgen konnte, die sich nachteilig auf die Funktion und Ausfallsicherheit ausgewirkt hat.

Die genannte Gestaltung weist den weiteren Vorteil auf, dass etwa Fehlmontagen, bei denen der Gleitring nicht wie gewünscht in die Aufnahmenut des Grundkörpers einrückt, weitgehend vermieden werden können.

Es versteht sich ferner, dass insbesondere die Abschlussfläche des Grundkörpers die Abschlussfläche des Gleitrings axial in Richtung auf die Primärseite leicht überdecken kann. Auf diese Weise kann bei der Montage des Dichtungssatzes eine unerwünschte axiale Klemmung des Gleitrings sicher vermieden werden.

Gemäß einem weiteren Aspekt weist der Gleitring an seiner der Aufnahmenut des Grundkörpers abgewandten Seite eine radial umlaufende nutförmige Ausnehmung auf, die als Reservoir für ein Betriebsmedium, insbesondere ein Schleppöl, fungiert.

In der nutförmigen Ausnehmung kann etwa überschüssiges Hydrauliköl oder dergleichen aufgenommen und zwischengespeichert werden. Auf diese Weise kann die Schmiermittelversorgung insbesondere des Gleitrings sichergestellt werden, ohne jedoch einen übermäßigen Schmiermittelübertritt auf die Primärseite zu erlauben.

Diese Ausgestaltung wird dadurch weitergebildet, dass die Ausnehmung des Gleitrings zwischen einem sekundärseitigen Kontaktbereich und einem primärseitigen Kontaktbereich des Gleitrings angeordnet ist.

Auf diese Weise kann der Gleitring zwei Dichtabschnitte bereitstellen. Zwischen diesen zwei Dichtabschnitten kann die Ausnehmung in den Gleitring eingebracht sein. Somit kann der Gleitring das Gleitpartnerteil an zwei voneinander axial beabstandeten Positionen kontaktieren. Auf diese Weise lassen sich maximale Kontaktkräfte, insbesondere maximale Flächenpressungen, wirksam reduzieren. Es versteht sich, dass der primärseitige Kontaktbereich und der sekundärseitige Kontaktbereich des Gleitrings etwa auch als Dichtlippen ausgestaltet sein können, die sich schräg in Richtung auf die Sekundärseite erstrecken. Insbesondere kann zumindest einer des sekundärseitigen Kontaktbereichs oder des primärseitigen Kontaktbereichs eine umlaufende Dichtkante aufweisen, die im gefügten Zustand das Gleitpartnerteil kontaktiert.

Es versteht sich, dass der Grundkörper, insbesondere dessen Dichtlippe, und der Gleitring im gefügten Zustand zumindest abschnittsweise verformt sein können, um eine hinreichende Dichtwirkung zu gewährleisten. Somit ist es durchaus vorstellbar, dass aufgrund der Verformung anstatt einer Dichtkante eine Dichtfläche zur Berührung mit dem Gleitpartnerteil gelangt.

In zweckmäßiger Weiterbildung ist die Ausnehmung des Gleitrings im Wesentlichen in einem Abschnitt der axialen Erstreckung des Gleitrings ausgebildet, in dem der Gleitring eine ringförmige Erhebung aufweist, die an die Aufnahmenut des Grundkörpers angepasst ist.

Die ringförmige Erhebung kann etwa als kreisförmig umlaufende Fläche ausgebildet sein, die gegenüber benachbarten Flächen des Gleitrings erhaben ist. Somit kann der Gleitring einen gestuften Querschnitt aufweisen. Insgesamt kann der radiale Bauraum des Dichtungssatzes klein gehalten werden.

Die Aufnahmenut des Grundkörpers ist mit einem ballig geformten Nutgrund versehen. Auf diese Weise kann in einfacher Weise im gefügten Zustand eine gewünschte (radiale) Vorspannung zwischen dem Trägerteil, dem Dichtungssatz und dem Gleitpartnerteil erzeugt werden. Die ballige Gestaltung des Nutgrundes kann etwa durch eine Nutgrundfläche mit im Wesentlichen konvexem Querschnitt erzeugt werden.

Gemäß einer weiteren Ausgestaltung ist die Dichtlippe in den Grundkörper integriert und insbesondere einstückig mit diesem ausgebildet, wobei die Dichtlippe gegenüber einer sekundärseitigen Abschlussfläche des Grundkörpers axial rückversetzt ist. Eine axial rückversetzte Anordnung der Dichtlippe kann dazu beitragen, die Dichtlippe vor Beschädigungen durch benachbarte Bauteile zu schützen. Ferner kann im Falle des radialen Auslenkens der Dichtlippe ein genügend großer Verformungsraum bereitgestellt werden. Der Grundkörper mitsamt der Dichtlippe kann etwa durch ein einfaches formgebendes Verfahren hergestellt werden.

Es ist weiter bevorzugt, wenn die Dichtlippe in Richtung auf die Sekundärseite axial vorspringend gestaltet ist. Auf diese Weise kann sich die Schrägstellung der Dichtlippe in Richtung auf die Sekundärseite ergeben. Die Dichtlippe kann etwa über ein "virtuelles" Stoffgelenk an den Grundkörper angebunden sein und sich im Falle einer Krafteinwirkung definiert verformen.

Es ist weiter bevorzugt, wenn die Dichtlippe im gefügten Zustand zumindest abschnittsweise radial vorgespannt ist. Es versteht sich, dass auch der Gleitring, insbesondere dessen sekundärseitiger Kontaktbereich und dessen primärseitiger Kontaktbereich, zumindest abschnittsweise radial vorgespannt sein können, wenn der Dichtungssatz gefügt ist.

In bevorzugter Ausgestaltung weist der Gleitring eine sekundärseitige konische Stützfläche auf, die dem Grundkörper zugewandt ist, wobei sich die konische Ringfläche der Dichtlippe im gefügten Zustand zumindest abschnittsweise an der Stützfläche abstützt.

Durch diese Maßnahme kann einerseits sichergestellt werden, dass nur ein begrenzter Bereich der Dichtlippe des Grundkörpers das Gleitpartnerteil kontaktieren kann. Ehe es zu einer Anlage weiterer Bereiche der Dichtlippe käme, kommt deren konische Ringfläche an der Stützfläche des Gleitrings zur Anlage. Auf diese Weise kann der Gleitring als Anschlag für die Dichtlippe fungieren. Insgesamt kann sich somit das tribologische Verhalten des Dichtungssatzes im gefügten Zustand deutlich verbessern, insbesondere auch bei hochdynamischen Anwendungen mit hohen Relativgeschwindigkeiten.

Gemäß einem weiteren Aspekt schließt die konische Ringfläche der Dichtlippe im gefügten Zustand mit der Gleitfläche des Gleitpartnerteils einen spitzen Winkel α ein, der in Richtung auf die Primärseite geöffnet ist. Die konische Stützfläche des Gleitrings kann eine mit der Neigung der Ringfläche korrespondierende Neigung aufweisen. Somit kann die Dichtlippe des Grundkörpers einerseits eine hohe Sensibilität aufweisen, um etwa auch bei geringen, aber hochdynamischen Verlagerungen des Gleitpartnerteils ausgelenkt werden zu können. Andererseits kann durch die Stützfläche des Gleitrings ein Anschlag bereitgestellt werden, der übertriebene Auslenkungen der Dichtlippe wirksam verhindert.

Es ist ferner bevorzugt, wenn der Grundkörper aus einem elastischen Kunststoff, insbesondere aus einem Elastomer gebildet ist, und wenn der Gleitring aus einem Verbundwerkstoff gebildet ist, der Polytetrafluorethylen (PTFE) enthält. Allgemein kann der Gleitring aus Polytetrafluorethylen sowie aus Polytetrafluorethylen enthaltenden Gemischen bestehen, die auch als PTFE-basierte Compounds bezeichnet werden. Das Compound kann beispielhaft einen tribologisch wirksamen Füllstoff enthalten.

So kann etwa das Trägerteil inklusive der Dichtlippe aus einem Polyurethan-Werkstoff gebildet sein. Andere elastische Werkstoffe sind denkbar, beispielsweise Gummiwerkstoffe, thermoplastische Elastomere und ähnliche Werkstoffe. Es versteht sich, dass der Grundkörper mit einer reibungsminimierenden und/oder verschleißhemmenden Beschichtung versehen sein kann. Der Gleitring kann allgemein etwa aus einem reibungsoptimierten und/oder verschleißmindernden Verbundwerkstoff bestehen. Der Verbundwerkstoff kann Polytetrafluorethylen sowie einen geeigneten Füllstoff umfassen. Bei dem Füllstoff kann es sich insbesondere um Bronze handeln. Es ist auch vorstellbar, einen Verbund aus Polytetrafluorethylen und zumindest einem Füllstoff zu bilden, der aus der Gruppe ausgewählt ist, die Folgendes enthält: Glasfasern, Kohlefasern, Kohle, Grafit, Molybdändisulfid, Bronze und organische Füllstoffe.

Zumindest der Grundkörper oder der Gleitring können behandelte Oberflächen aufweisen, insbesondere deutlich reduzierte Rautiefen zur Reibungsoptimierung.

Die Aufgabe der Erfindung wird ferner gelöst durch eine Dichtungsanordnung für einen Kolben oder eine Kolbenstange, insbesondere für Hydraulikanwendungen, die zumindest einen Dichtungssatz nach einem der vorgenannten Aspekte aufweist, der an einem Trägerteil aufgenommen ist.

Auch auf diese Weise wird die Aufgabe der Erfindung vollkommen gelöst.

Zur weiteren Erhöhung der Dichtwirkung kann es vorgesehen sein, eine Dichtungsanordnung bereitzustellen, die zumindest zwei derartige Dichtsätze aufweist, die axial zueinander versetzt angeordnet sind.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Figur 1: eine seitliche geschnittene Teilansicht eines innen dichtenden Dichtungssatzes;
- Figur 2: eine seitliche geschnittene Teilansicht einer Dichtungsanordnung mit einem innen dichtenden Dichtungssatz;
- Figur 3: eine seitliche geschnittene Teilansicht eines Grundkörpers eines Dichtungssatzes;
- Figur 4: eine seitliche geschnittene Teilansicht eines Gleitrings eines Dichtungssatzes, der mit dem Grundkörper gemäß Figur 3 kombinierbar ist; und
- Figur 5: eine seitliche geschnittene Teilansicht eines außen dichtenden Dichtungssatzes, der ein Gleitpartnerteil kontaktiert.

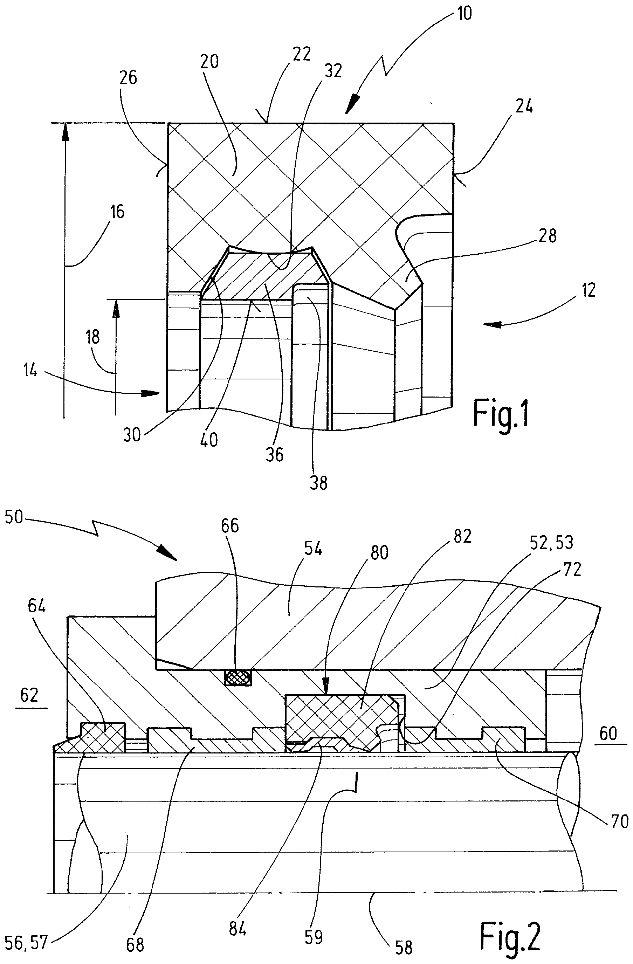

Fig. 1 zeigt eine geschnittene seitliche Teilansicht eines Dichtungssatzes 10, der im Hause der Anmelderin durch Benutzung bekannt geworden ist.

Der Dichtungssatz 10 ist beispielhaft als innen dichtender Dichtungssatz ausgebildet. Der Dichtungssatz 10 dient dazu, eine Sekundärseite 12 gegenüber einer Primärseite 14 abzudichten. Bei der Sekundärseite 12 handelt es sich insbesondere um eine Hochdruckseite. Bei der Primärseite 14 handelt es sich insbesondere um eine Niederdruckseite. Beispielhaft sind in Fig. 1 durch Pfeile 16, 18 Nennabmessungen des Dichtungssatzes 10 angedeutet. Ein mit 16 bezeichneter Pfeil kennzeichnet einen Außendurchmesser. Ein mit 18 bezeichneter Pfeil kennzeichnet einen Innendurchmesser. Der innen dichtende Dichtungssatz 10 ist dazu ausgebildet, am Innendurchmesser 18 dichtend zu wirken.

Der Dichtungssatz 10 weist einen Grundkörper 20 auf, der etwa aus Polyurethan (PUR) erzeugt sein kann. Der Grundkörper 20 weist eine Aufnahmefläche 22 zur Aufnahme an einem Trägerteil auf. Am Grundkörper 20 sind ferner eine sekundärseitige Abschlussfläche 24 und eine primärseitige Abschlussfläche 26 ausgebildet. Ferner weist der Grundkörper 20 eine Dichtlippe 28 auf. Entlang des Grundkörpers 20 erstreckt sich ferner eine radial umlaufende Aufnahmenut 30, die eine Aufnahmegeometrie für einen Gleitring 36 bereitstellt.

Die Aufnahmenut 30 weist einen ballig gestalteten Nutgrund 32 auf. Der Gleitring 36 ist in der Aufnahmenut 30 des Grundkörpers 20 aufgenommen und radial geführt. Die Aufnahmenut 30 gewährleistet auch eine axiale Führung des Gleitrings 36. Es ist jedoch vorstellbar, die axiale Führung des Gleitrings 36 mit etwas Spiel zu versehen. Der Gleitring 36 kann insbesondere aus einem Verbundwerkstoff gebildet sein, der auf Basis von Polytetrafluorethylen (PTFE) besteht sowie mit zumindest einem Füllstoff versehen ist. Bei dem Füllstoff kann es sich insbesondere um Bronze handeln. Der Gleitring 36 weist ferner eine stufenförmige Ausnehmung 38 auf, die an der der Dichtlippe 28 zugewandten Seite des Gleitrings 36 in diesen eingebracht ist. Ferner ist am Gleitring 36 ein (zylindrischer) Kontaktbereich 40 ausgebildet, der dazu vorgesehen ist, im gefügten Zustand des Dichtungssatzes 10 ein Gleitpartnerteil, etwa eine Kolbenstange, zu kontaktieren.

Anhand der Fig. 2 bis 5 werden Gestaltungen alternativer Dichtungssätze veranschaulicht, die gegenüber dem in Fig. 1 gezeigten Dichtungssatz 10 verschiedene konstruktive Vorteile mit sich bringen.

Fig. 2 zeigt eine geschnittene Teildarstellung einer Dichtungsanordnung 50. Die Dichtungsanordnung 50 kann ein Trägerteil 52 umfassen, das vorliegend etwa als Hülse oder Buchse 53 ausgebildet ist. Das Trägerteil 52 ist beispielhaft an einem Gestellteil 54 aufgenommen. Die Dichtungsanordnung 50 umschließt in ihrem Inneren ein Gleitpartnerteil 56, das vorliegend beispielhaft als Kolbenstange 57 ausgebildet ist (in Fig. 2 nur teilweise dargestellt). Die Dichtungsanordnung 50 kann im Wesentlichen rotationssymmetrisch um eine Längsachse 58 ausgebildet sein. Mittels der Dichtungsanordnung 50 kann eine druckbelastete Sekundärseite 60 gegenüber einer Primärseite 62 abgedichtet werden, an der ein geringerer Druck anliegt. Bei dem Trägerteil 52, dem Gestellteil 54 und dem Gleitpartnerteil 56 kann es sich etwa um Bestandteile einer hydraulischen Arbeitsmaschine handeln.

Die Dichtungsanordnung 50 kann mit einer Mehrzahl von Dichtelementen, Führungselementen und/oder Lagerelementen versehen sein, um eine gewünschte Funktionalität bereitzustellen. Beispielhaft weist die anhand der Fig. 2 veranschaulichte Dichtungsanordnung 50 einen Abstreifring 64, einen Dichtring 66 sowie Führungselemente 68, 70 auf, die allesamt am Trägerteil 52 aufgenommen sein können.

In das Trägerteil 52 ist ferner eine Ausnehmung 72 eingebracht, die etwa als ringförmig umlaufende Ausnehmung gestaltet ist. Die Ausnehmung 72 fungiert als Aufnahme für einen Dichtungssatz 80. Der Dichtungssatz 80 ist zwischen dem Trägerteil 52 und dem Gleitpartnerteil 56 aufgenommen. Beispielhaft kann der Dichtungssatz 80 durch die Ausnehmung 72 im Trägerteil 52 axial und/oder radial gesichert werden. Der Dichtungssatz 80 weist einen Grundkörper 82 auf, der die Ausnehmung 72 kontaktiert. Ferner ist ein Gleitring 84 vorgesehen, der eine Gleitfläche oder Oberfläche 59 des vorliegend als Kolbenstange 57 ausgebildeten Gleitpartnerteils 56 kontaktiert. An seiner der Gleitfläche 59 des Gleitpartnerteils 56 radial abgewandten Seite (hier: an seinem Außenumfang) kontaktiert der Gleitring 84 zumindest abschnittsweise den Grundkörper 82.

Der Dichtungssatz 80 kann Nennabmessungen in verschiedenen Bereichen aufweisen, etwa einen Nenn- Innendurchmesser, der einem Durchmesser (einer Kolbenstange) von etwa 32 mm bis hin zu über 600 mm entspricht. Abhängig von verwendeten Werkstoffen können etwa Temperarturbereiche von -50°C (Celsius) bis +200°C (Celsius) abgedeckt werden. Andere Abmessungen und Spezifikationen sind gleichwohl denkbar und können an den jeweiligen Anwendungsfall angepasst werden.

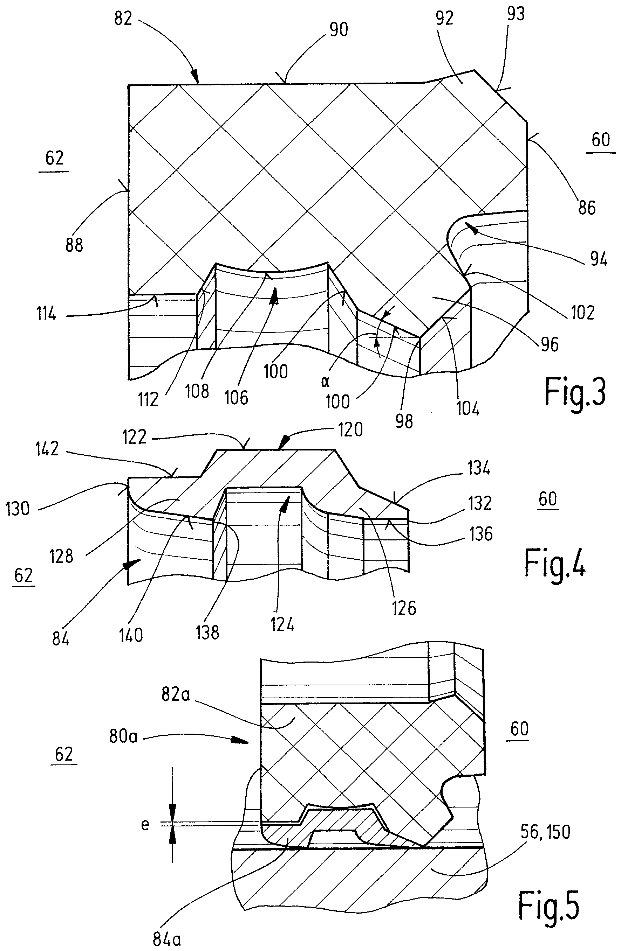

Die Fig. 3 und 4 zeigen vergrößerte geschnittene seitliche Teildarstellung des Grundkörpers 82 und des Gleitrings 84, die maßstäblich miteinander korrespondieren. Es versteht sich jedoch, dass sich der Maßstab der Darstellung in Fig. 2 vom Maßstab der Darstellungen in Fig. 3 und Fig. 4 unterscheiden kann.

Der Grundkörper 82 des Dichtungssatzes 80 kann etwa aus Polyurethan bestehen und im Wesentlichen als ringförmiges oder rotationssymmetrisches Teil ausgestaltet sein. Der Grundkörper 82 weist eine sekundärseitige Abschlussfläche 86 und eine primärseitige Abschlussfläche 88 auf. Die sekundärseitige Abschlussfläche 86 und die primärseitige Abschlussfläche 88 bilden jeweils axiale Anschläge des Grundkörpers 82 aus.

An seinem Außenumfang weist der Grundkörper 82 eine umfängliche Passfläche 90 auf, die etwa im Wesentlichen als zylindrische Fläche ausgebildet sein kann. Die Passfläche 90 ist beispielhaft an einen Innendurchmesser der Ausnehmung 72 des Trägerteils 52 angepasst (vgl. auch Fig. 2). Ferner weist der Grundkörper 82 an seinem sekundärseitigen Ende einen radialen Vorsprung 92 auf, der in eine Fase 93 übergeht. Der radiale Vorsprung 92 weist einen größeren Außendurchmesser als die Passfläche 90 auf. Der radiale Vorsprung 92 kann dazu beitragen, den Dichtungssatz 80, insbesondere dessen Grundkörper 82, definiert, spielfrei und mit gewünschter Vorspannung radial an einer Aufnahme festzulegen. Die Fase 93 kann etwa als Einführhilfe und/oder Einführschräge genutzt werden.

An seinem sekundärseitigen Ende weist der Grundkörper 82 ferner eine Einsenkung 94 auf, die gegenüber der sekundärseitigen Abschlussfläche 86 axial rückversetzt ist. An die Einsenkung 94 schließt sich eine Dichtlippe 96 an. Die Dichtlippe 96 erstreckt sich schräg in Richtung auf die Sekundärseite 60. Die Dichtlippe 96 weist einen Spitzenbereich oder eine Spitze 98 auf. Insbesondere kann der Spitzenbereich 98 im gefügten Zustand als Dichtkante fungieren. Daneben weist die Dichtlippe 96 primärseitig eine konische Ringfläche 100 auf. Eine weitere konische Ringfläche 102 ist sekundärseitig bei der Dichtlippe 96 ausgebildet. Zwischen der primärseitigen konischen Ringfläche 100 und der sekundärseitigen konischen Ringfläche 102 ist eine Stirnfläche 104 ausgebildet. Die Dichtlippe 96 ist insbesondere radial auslenkbar. Auf diese Weise kann im gefügten Zustand eine Vorspannung erzeugt werden, die zur Abdichtung beiträgt.

In Richtung auf die Primärseite 62 schließt sich beim Grundkörper 82 eine Aufnahmenut 106 an die Dichtlippe 96 an. Die Aufnahmenut 106 ist beispielhaft als ringförmige umlaufende Vertiefung an einer Innenseite in den Grundkörper 82 eingebracht. Die Aufnahmenut 106 weist einen Nutgrund 108 auf, der durch eine ballige oder im Querschnitt konvex ausgebildete Fläche gebildet ist. Ferner weist die Aufnahmenut 106 eine primärseitige Randfläche 112 und eine sekundärseitige Randfläche 110 auf. Die Randflächen 110, 112 können auch als primärseitige Flanke 112 und sekundärseitige Flanke 110 bezeichnet werden.

In Richtung auf die Primärseite 62 schließt sich eine primärseitige Anschlussfläche 114 an die Aufnahmenut 106 an. Die primärseitige Anschlussfläche 114 ist jedoch im Vergleich zum Spitzenbereich 98 der Dichtlippe 96 radial nach außen versetzt, um möglichst nicht mit der Gleitfläche 59 des Gleitpartnerteils 56 in Kontakt zu treten. Es ist bevorzugt, wenn der Dichtungssatz 80 eine Gestaltung aufweist, die es ermöglicht, dass allenfalls nur ein kleiner Bereich, insbesondere der Spitzenbereich 98 der Dichtlippe 96, im gefügten Zustand die Gleitfläche 59 des Gleitpartnerteils 56 kontaktieren kann.

Der anhand der Fig. 4 veranschaulichte Gleitring 84 ist an die Gestaltung des Grundkörpers 82 angepasst. Gemeinsam können der Grundkörper 82 und der Gleitring 84 in gewünschter Weise dazu beitragen, möglichst definierte Kontaktverhältnisse im gefügten Zustand zu ermöglichen. Der Gleitring 84 weist einen Querschnitt mit gestufter Gestaltung auf. Insbesondere ist beim Gleitring 84 eine etwa trapezförmige Erhebung 120 vorgesehen, die eine Zylinderfläche 122 aufweist, die im gefügten Zustand den Nutgrund 108 der Aufnahmenut 106 des Grundkörpers 82 kontaktiert (Fig. 3). Somit kann der Gleitring 84 radial durch die Aufnahmenut 106 des Grundkörpers 82 geführt werden. Auch eine axiale Führung kann bewirkt werden, wobei ein gewisses Axialspiel durchaus gewünscht sein kann.

An seiner der Erhebung 120 abgewandten Seite weist der Gleitring 84 eine nutförmige Ausnehmung 124 auf, die ebenso etwa als ringförmig umlaufende Nut ausgebildet sein kann. Die nutförmige Ausnehmung 124 kann etwa als Reservoir oder Tasche für ein Betriebsmedium, insbesondere für ein Schleppöl, Hydrauliköl oder Ähnliches, fungieren. Da die nutförmige Ausnehmung 124 in dem Bereich des Gleitrings 84 ausgebildet ist, in dem auch die Erhebung 120 vorgesehen ist, erfolgt durch das Einbringen der nutförmigen Ausnehmung 124 keine wesentliche Schwächung des Querschnitts des Gleitrings 84. Die nutförmige Ausnehmung 124 ist an der im gefügten Zustand dem Gleitpartnerteil 56 zugewandten Seite des Gleitrings 84 ausgebildet.

Die nutförmige Ausnehmung 124 ist zwischen einem sekundärseitigen Kontaktbereich 126 und einem primärseitigen Kontaktbereich 128 des Gleitrings 84 angeordnet. Mit anderen Worten kann der Gleitring 84 im gefügten Zustand zwei radial voneinander beabstandete Kontaktbereiche 126, 128 aufweisen, in denen das Gleitpartnerteil kontaktiert werden kann.

An den primärseitigen Kontaktbereich 128 schließt sich ein primärseitiger Abschlussbereich 130 an. Der primärseitige Abschlussbereich 130 mündet in einer primärseitigen Stirnfläche, die im gefügten Zustand des Dichtungssatzes 80 im Wesentlichen mit der primärseitigen Abschlussfläche 88 des Grundkörpers 82 zusammenfallen kann. Gleichwohl ist es bevorzugt, wenn die primärseitige Abschlussfläche 88 des Grundkörpers 82 die primärseitige Abschlussfläche 130 des Gleitrings 84 axial minimal überdeckt. Auf diese Weise kann der Gleitring 84 vor potentiell nachteiliger axialer Vorspannung im gefügten Zustand geschützt werden.

Der Gleitring 84 weist ferner im Bereich des sekundärseitigen Kontaktbereichs 126 eine sekundärseitige Spitze 132 auf. Mit anderen Worten kann der sekundärseitige Kontaktbereich 126 eine sekundärseitige Dichtlippe des Gleitrings 84 bilden, die in die sekundärseitige Spitze 132 mündet.

Die Spitze 132 ist zwischen einer konischen Stützfläche 134 und einer dieser abgewandten Kontaktfläche 136 angeordnet. Die Kontaktfläche 136 ist im gefügten Zustand der Gleitfläche 59 des Gleitpartnerteils 56 zugewandt. Die konische Stützfläche 134 ist der Dichtlippe 96, insbesondere der konischen Ringfläche 100 der Dichtfläche 96, des Grundkörpers 82 zugewandt. Die konische Ringfläche 100 kann sich bei übermäßiger Verformung an die konische Stützfläche 134 des Gleitrings 84 anlegen. Somit kann eine übermäßige Erhöhung der Kontaktfläche zwischen dem Grundkörper 82 und dem Gleitpartnerteil 56 vermieden werden.

Beim primärseitigen Kontaktbereich 128 weist der Gleitring 84 ferner eine primärseitige Spitze 138 auf. Die primärseitige Spitze 138 ist zwischen der nutförmigen Ausnehmung 124 und einer primärseitigen Kontaktfläche 140 angeordnet. Der primärseitige Kontaktbereich 128 kann etwa auch als primärseitige Dichtlippe des Gleitrings 84 bezeichnet werden. Insbesondere die primärseitige Spitze 138 kann im gefügten Zustand die Gleitfläche 59 des Gleitpartnerteils 56 kontaktieren. An seiner der primärseitigen Kontaktfläche 140 abgewandten Seite weist der Gleitring 84 ferner eine Versatzfläche 142 auf, die gegenüber der Zylinderfläche 122 der Erhebung 120 radial versetzt ist. Insbesondere ist die Versatzfläche 142 derart ausgestaltet, dass im gefügten Zustand, zumindest in einem Normalzustand, kein unmittelbarer (radialer) Kontakt zwischen der Versatzfläche 142 des Gleitrings 84 und der mit dieser korrespondierenden primärseitigen Anschlussfläche 114 des Grundkörpers 82 besteht, vgl. auch in Fig. 5 mit e bezeichneten Versatzmaß. Auf diese Weise kann auch der Gleitring 84 etwa bei übermäßigen Auslenkungen des Gleitpartnerteils 56 zumindest abschnittsweise partiell ausweichen, um diese Verformungen zu kompensieren.

Insgesamt kann der den Grundkörper 82 und den Gleitring 84 aufweisende Dichtungssatz 80 auf Basis lediglich zweier Komponenten eine hochwirksame Abdichtung auch bei hochdynamischen Anwendungen mit hohen Relativgeschwindigkeiten gewährleisten. Der Gleitring 84 kann als Stützkörper für die Dichtlippe 96 des Grundkörpers 82 fungieren und diese vor übermäßigen Verformungen bewahren, die funktionell nachteilig wären.

Wie vorstehend bereits erwähnt, kann der Dichtungssatz 80 auch als außen dichtender Dichtungssatz gestaltet sein. Beispielhaft veranschaulicht in diesem Zusammenhang Fig. 5 einen außen dichtenden Dichtungssatz 80a. In bekannter Weise ist der Dichtungssatz 80a mit einem Grundkörper 82a und einem Gleitring 84a versehen. Jedoch ist der Gleitring 84a an einem Außenumfang des Grundkörpers 82a aufgenommen. Beispielhaft kann der Dichtungssatz 80a an einer Außenfläche oder Mantelfläche eines Kolbens aufgenommen sein (in Fig. 5 nicht dargestellt). Folglich kann der Dichtungssatz 80a an seinem Außenumfang ein Gleitpartnerteil 56a kontaktieren, das etwa als (Innen-)Zylinder 150 ausgebildet ist. Die vorstehend beschriebenen Ausführungen und Aspekte können in einfacher Weise auf die geänderte Zuordnung von Innenteil und Außenteil übertragen werden.

## Patentansprüche

1. Dichtungssatz (80), insbesondere Kolbendichtung oder Kolbenstangendichtung, zur Abdichtung einer Primärseite (62), insbesondere einer Niederdruckseite, gegenüber einer Sekundärseite (60), insbesondere einer Hochdruckseite, mit einem Grundkörper (82), der an einem Trägerteil (52) aufnehmbar ist, und mit einem Gleitring (84) zur Kontaktierung einer Gleitfläche (59) eines Gleitpartnerteils (56), wobei der Grundkörper (82) ringförmig gestaltet ist und eine radial umlaufende Aufnahmenut (106) für den Gleitring (84) aufweist, wobei am Grundkörper (82) ferner eine radial umlaufende Dichtlippe (96) vorgesehen ist, die zwischen der Aufnahmenut (106) für den Gleitring (84) und einem sekundärseitigen Ende des Grundkörpers (82) ausgebildet ist, wobei die Dichtlippe (96) einen Spitzenbereich (98) und eine sich daran anschließende konische Ringfläche (100) aufweist, und wobei der Gleitring (84) im gefügten Zustand zumindest abschnittsweise die Aufnahmenut (106), eine sich daran anschließende primärseitige Anschlussfläche (114) und die konische Ringfläche (100) überdeckt, **dadurch gekennzeichnet, dass** die Aufnahmenut (106) des Grundkörpers (82) mit einem ballig geformten Nutgrund (108) versehen ist, wobei der Nutgrund (108) einen konvexen Querschnitt aufweist, und dass der Gleitring (84) ferner eine Versatzfläche (142) aufweist, die derart ausgestaltet, dass im gefügten Zustand zwischen der Versatzfläche (142) des Gleitrings (84) und der mit dieser korrespondierenden primärseitigen Anschlussfläche (114) des Grundkörpers (82) ein Versatz (e) besteht.

2. Dichtungssatz (80) nach Anspruch 1, **dadurch gekennzeichnet, dass** der Grundkörper (82) und der Gleitring (84) ringförmig um eine gemeinsame Längsachse (58) ausgebildet sind, und wobei der Grundkörper (82) und der Gleitring (84) am primärseitigen Ende des Dichtungssatzes (80) jeweils eine Abschlussfläche (88, 130) aufweisen, deren axiale Längserstreckungen im Wesentlichen miteinander korrespondieren.

3. Dichtungssatz (80) nach Anspruch 1 oder 2, **dadurch gekennzeichnet, dass** der Gleitring (84) an seiner der Aufnahmenut des Grundkörpers (82) abgewandten Seite eine radial umlaufende nutförmige Ausnehmung (124) aufweist, die als Reservoir für ein Betriebsmedium, insbesondere ein Schleppöl, fungiert.

4. Dichtungssatz (80) nach Anspruch 3, **dadurch gekennzeichnet, dass** die Ausnehmung (124) des Gleitrings (84) zwischen einem sekundärseitigen Kontaktbereich (126) und einem primärseitigen Kontaktbereich (128) des Gleitrings (84) angeordnet ist.

5. Dichtungssatz (80) nach Anspruch 3 oder 4, **dadurch gekennzeichnet, dass** die Ausnehmung (124) des Gleitrings (84) im Wesentlichen in einem Abschnitt der axialen Erstreckung des Gleitrings (84) ausgebildet ist, in dem der Gleitring (84) eine ringförmige Erhebung (120) aufweist, die an die Aufnahmenut des Grundkörpers (82) angepasst ist.

6. Dichtungssatz (80) nach irgendeinem der vorhergehenden Ansprüche, **dadurch gekennzeichnet, dass** die Dichtlippe (96) in den Grundkörper (82) integriert ist und insbesondere einstückig mit diesem ausgebildet ist, und wobei die Dichtlippe (96) gegenüber einer sekundärseitigen Abschlussfläche (86) des Grundkörpers (82) axial rückversetzt ist.

7. Dichtungssatz (80) nach irgendeinem der vorhergehenden Ansprüche, **dadurch gekennzeichnet, dass** die Dichtlippe (96) in Richtung auf die Sekundärseite axial vorspringend gestaltet ist.

8. Dichtungssatz (80) nach einem der vorhergehenden Ansprüche, **dadurch gekennzeichnet, dass** die Dichtlippe (96) im gefügten Zustand zumindest abschnittsweise radial vorgespannt ist.

9. Dichtungssatz (80) nach einem der vorhergehenden Ansprüche, **dadurch gekennzeichnet, dass** der Gleitring (84) eine sekundärseitige konische Stützfläche (134) aufweist, die dem Grundkörper (82) zugewandt ist, und wobei sich die konische Ringfläche (100) der Dichtlippe (96) im gefügten Zustand zumindest abschnittsweise an der Stützfläche (134) abstützt.

10. Dichtungssatz (80) nach einem der vorhergehenden Ansprüche, **dadurch gekennzeichnet, dass** die konische Ringfläche (100) im gefügten Zustand mit der Gleitfläche (59) des Gleitpartnerteils (56) einen spitzen Winkel (α) einschließt, der in Richtung auf die Primärseite (62) geöffnet ist.

11. Dichtungssatz (80) nach einem der vorhergehenden Ansprüche, **dadurch gekennzeichnet, dass** der Grundkörper (82) aus einem elastischen Kunststoff, insbesondere aus einem Elastomer, gebildet ist, und wobei der Gleitring (84) aus einem Verbundwerkstoff gebildet ist, der Polytetrafluorethylen sowie zumindest einen tribologisch wirksamen Füllstoff enthält.

12. Dichtungsanordnung (50) für einen Kolben oder eine Kolbenstange, insbesondere für Hydraulikanwendungen, **gekennzeichnet durch** zumindest einen Dichtungssatz (80) nach einem der vorhergehenden Ansprüche, der an einem Trägerteil (52) aufgenommen ist.

13. Dichtungsanordnung (50) nach Anspruch 12, **gekennzeichnet durch** zumindest zwei Dichtungssätze (80), die axial zueinander versetzt angeordnet sind.

## Claims

1. Seal set (80), particularly piston seal or piston rod seal, for sealing a primary side (62), particularly a low-pressure side, against a secondary side (60), particularly a high-pressure side, comprising a main body (82) which is arranged to be received at a support part (52), and a slide ring (84) for contacting a slide surface (59) of a slide partner part (56), wherein the main body (82) is arranged in an annular fashion and comprises a radial circumferential receiving groove (106) for the slide ring (84), wherein at the main body (82) further a radial circumferential sealing lip (96) is provided, which is formed between the receiving groove (106) for the slide ring (84) and a secondary-side end of the main body (82), wherein the sealing lip (96) comprises a tip region (98) and a conical ring surface (100) adjoining the tip region (98), and wherein the slide ring (84), in the mounted state, at least sectionally covers the receiving groove (106), a primary-side adjoining surface (114) adjoining the receiving groove (106), and the conical ring surface (100), **characterized in that** the receiving groove (106) of the main body (82) is provided with a spherically shaped groove ground (108), wherein the groove ground (108) comprises a convex cross-section, and wherein the slide ring (84) further comprises an offset surface (142) which is arranged such that in the mounted state an offset (e) is present between the offset surface (142) of the slide ring (84) and the corresponding primary-side adjoining surface (114) of the main body (82).

2. Seal set (80) according to claim 1, **characterized in that** the main body (82) and the slide ring (84) are arranged in an annular fashion about a common longitudinal axis (58), and wherein the main body (82) and the slide ring (84) respectively comprise an end surface (88, 130) at the primary-side end of the seal set (80), wherein the axial longitudinal extensions of the end surfaces (88, 130) basically correspond to one another.

3. Seal set (80) according to claim 1 or 2, **characterized in that** the slide ring (84) comprises a radial circumferential groove-shaped recess (124) at a side thereof facing away from the receiving groove of the main body (82), wherein the groove-shaped recess (124) serves as a reservoir for an operating medium, particularly a drag oil.

4. Seal set (80) according to claim 3, **characterized in that** the recess (124) of the slide ring (84) is arranged between a secondary-side contact portion (126) and a primary-side contact portion (128) of the slide ring (84).

5. Seal set (80) according to claim 3 or 4, **characterized in that** the recess (124) of the slide ring (84) is basically arranged in a portion of the axial extension of the slide ring (84) in which the slide ring (84) comprises an annular protrusion (120) which is adapted to the receiving groove of the main body (82).

6. Seal set (80) according to any one of the preceding claims, **characterized in that** the sealing lip (96) is integrated in the main body (82) and particularly integrally formed with the main body (82), and wherein the sealing lip (96) is rearwardly displaced in the axial direction with respect to a secondary-side end surface (86) of the main body (82).

7. Seal set (80) according to any one of the preceding claims, **characterized in that** the sealing lip (96) is arranged in a fashion axially protruding towards the secondary side.

8. Seal set (80) according to any one of the preceding claims, **characterized in that** the sealing lip (96) is at least sectionally radially biased in the mounted state.

9. Seal set (80) according to any one of the preceding claims, **characterized in that** the slide ring (84) comprises a secondary-side conical supporting surface (134) facing the main body (82), and wherein the conical ring surface (100) of the sealing lip (96) is, in the mounted state, at least sectionally supported at the supporting surface (134).

10. Seal set (80) according to any one of the preceding claims, **characterized in that** the conical ring surface (100) is arranged, in the mounted state, at an acute angle (α) with respect to the slide surface (59) of the slide partner part (56), and wherein the acute angle (α) is opened towards the primary side (62).

11. Seal set (80) according to any one of the preceding claims, **characterized in that** the main body (82) is formed from an elastic plastic material, particularly from an elastomer, and wherein the slide ring (84) is made from a composite material comprising polytetrafluoroethylene and at least one tribologically-effective filler material.

12. Sealing arrangement (50) for a piston or a piston rod, particularly for hydraulic applications, **characterized by** at least one seal set (80) according to any one of the preceding claims, wherein the seal set (80) is arranged at a support part (52).

13. Sealing arrangement (50) according to claim 12, **characterized by** at least two seal sets (80) which are arranged in a fashion axially offset with respect to one another.

## Revendications

1. Ensemble formant joint d'étanchéité (80), en particulier joint d'étanchéité de piston ou joint d'étanchéité de tige de piston, pour l'étanchéité d'un côté primaire (62), en particulier d'un côté basse pression, par rapport à un côté secondaire (60), en particulier un côté haute pression, avec un corps de base (82) qui peut être reçu sur une partie de support (52) et avec une bague de glissement (84) destinée à venir en contact avec une surface de glissement (59) d'une partie partenaire de glissement (56), le corps de base (82) étant configuré sous forme annulaire et présentant une rainure de réception radialement périphérique (106) pour la bague de glissement (84), une lèvre d'étanchéité radialement périphérique (96) étant en outre prévue sur le corps de base (82), laquelle est réalisée entre la rainure de réception (106) pour la bague de glissement (84) et une extrémité du côté secondaire du corps de base (82), la lèvre d'étanchéité (96) présentant une région de pointe (98) et une surface annulaire conique (100) s'y raccordant, et la bague de glissement (84), dans l'état assemblé, recouvrant au moins en partie la rainure de réception (106), une surface de raccordement du côté primaire s'y raccordant (114) et la surface annulaire conique (100), **caractérisé en ce que** la rainure de réception (106) du corps de base (82) est pourvue d'un fond de rainure (108) de forme bombée, le fond de rainure (108) présentant une section transversale convexe et **en ce que** la bague de glissement (84) présente en outre une surface de décalage (142) qui est configurée de telle sorte que dans l'état assemblé, il existe un décalage (e) entre la surface de décalage (142) de la bague de glissement (84) et la surface de raccordement correspondant à celle-ci du côté primaire (114) du corps de base (82).

2. Ensemble formant joint d'étanchéité (80) selon la revendication 1, **caractérisé en ce que** le corps de base (82) et la bague de glissement (84) sont réalisés sous forme annulaire autour d'un axe longitudinal commun (58), et le corps de base (82) et la bague de glissement (84) présentant, au niveau de l'extrémité du côté primaire de l'ensemble formant joint d'étanchéité (80), à chaque fois une surface de terminaison (88, 130), dont les étendues longitudinales axiales se correspondent sensiblement mutuellement.

3. Ensemble formant joint d'étanchéité (80) selon la revendication 1 ou 2, **caractérisé en ce que** la bague de glissement (84) présente, au niveau de son côté opposé à la rainure de réception du corps de base (82), un évidement en forme de rainure radialement périphérique (124) qui sert de réservoir pour un fluide de travail, en particulier une huile d'entraînement.

4. Ensemble formant joint d'étanchéité (80) selon la revendication 3, **caractérisé en ce que** l'évidement (124) de la bague de glissement (84) est disposé entre une région de contact du côté secondaire (126) et une région de contact du côté primaire (128) de la bague de glissement (84).

5. Ensemble formant joint d'étanchéité (80) selon la revendication 3 ou 4, **caractérisé en ce que** l'évidement (124) de la bague de glissement (84) est réalisé essentiellement dans une portion de l'étendue axiale de la bague de glissement (84) dans laquelle la bague de glissement (84) présente un rehaussement de forme annulaire (120) qui est adapté à la rainure de réception du corps de base (82).

6. Ensemble formant joint d'étanchéité (80) selon l'une quelconque des revendications précédentes, **caractérisé en ce que** la lèvre d'étanchéité (96) est intégrée dans le corps de base (82) et est réalisée notamment d'une seule pièce avec celui-ci, et la lèvre d'étanchéité (96) étant décalée en arrière axialement par rapport à une surface de terminaison du côté secondaire (86) du corps de base (82).

7. Ensemble formant joint d'étanchéité (80) selon l'une quelconque des revendications précédentes, **caractérisé en ce que** la lèvre d'étanchéité (96) est configurée de manière à faire saillie axialement dans la direction du côté secondaire.

8. Ensemble formant joint d'étanchéité (80) selon l'une quelconque des revendications précédentes, **caractérisé en ce que** la lèvre d'étanchéité (96), dans l'état assemblé, est au moins en partie précontrainte radialement.

9. Ensemble formant joint d'étanchéité (80) selon l'une quelconque des revendications précédentes, **caractérisé en ce que** la bague de glissement (84) présente une surface de support conique du côté secondaire (134) qui est tournée vers le corps de base (82), et la surface annulaire conique (100) de la lèvre d'étanchéité (96) s'appuyant dans l'état assemblé au moins en partie contre la surface de support (134).

10. Ensemble formant joint d'étanchéité (80) selon l'une quelconque des revendications précédentes, **caractérisé en ce que** la surface annulaire conique (100), dans l'état assemblé, forme avec la surface de glissement (59) de la partie partenaire de glissement (56) un angle aigu (α) qui est ouvert dans la direction du côté primaire (62).

11. Ensemble formant joint d'étanchéité (80) selon l'une quelconque des revendications précédentes, **caractérisé en ce que** le corps de base (82) est formé d'un plastique élastique, en particulier d'un élastomère, et la bague de glissement (84) étant formée d'un matériau composite qui contient du polytétrafluoroéthylène ainsi qu'au moins une charge à effet tribologique.

12. Agencement de joint d'étanchéité (50) pour un piston ou une tige de piston, en particulier pour des applications hydrauliques, **caractérisé par** au moins un ensemble formant joint d'étanchéité (80) selon l'une quelconque des revendications précédentes qui est reçu au niveau d'une partie de support (52).

13. Agencement de joint d'étanchéité (50) selon la revendication 12, **caractérisé par** au moins deux ensembles formant joint d'étanchéité (80) qui sont disposés de manière décalée axialement l'un par rapport à l'autre.
